# FASCICULE DE BREVET EUROPEEN

(11) **EP 3 075 713 B1**
(45) Date de publication et mention de la délivrance du brevet: **09.05.2018**
(21) Numéro de dépôt: 15305505.8
(22) Date de dépôt: 03.04.2015
(51) Int. Cl.: C02F 1/44, B01D 61/00, C02F 1/52

(54) **PROCEDE DE PURIFICATION DE L'EAU PAR OSMOSE DIRECTE ET CRISTALLISATION DE CLATHRATES HYDRATES**
VERFAHREN ZUR REINIGUNG VON WASSER DURCH DIREKTE OSMOSE UND KRISTALLISATION VON CLATHRAT-HYDRATEN
METHOD FOR PURIFICATION OF WATER BY DIRECT OSMOSIS AND CRYSTALLISATION OF CLATHRATE HYDRATES

(43) Date de publication de la demande: 05.10.2016
(73) Titulaire: BGH, 64170 Lacq (FR)
(72) Inventeur: Mottet, Bruno, 56520 Guidel (FR)
(74) Mandataire: Brevalex

(56) Documents cités:
- WO-A1-2013/049253
- WO-A2-2009/155596
- US-B1- 7 560 028
- DEVIN L. SHAFFER ET AL: "Desalination and Reuse of High-Salinity Shale Gas Produced Water: Drivers, Technologies, and Future Directions", ENVIRONMENTAL SCIENCE & TECHNOLOGY, vol. 47, no. 17, 3 septembre 2013 (2013-09-03), pages 9569-9583, XP055201636, ISSN: 0013-936X, DOI: 10.1021/es401966e

## Description

### DOMAINE TECHNIQUE

L'invention concerne un procédé de purification de l'eau par osmose directe et cristallisation de clathrates hydrates.

Plus précisément, l'invention a trait à un procédé de purification d'un liquide comprenant de l'eau et des impuretés qui met en oeuvre la combinaison d'une technique d'osmose inverse et d'une technique de cristallisation des clathrates hydrates.

Par purification de l'eau, on entend généralement toute opération consistant à traiter une eau contenant des impuretés à une teneur initiale de façon à ce qu'à l'issue de cette opération, la teneur finale en impuretés soit inférieure à la teneur initiale.

Par impureté, on entend tout élément, molécule, ion, ou autre, différent des éléments constitutifs de l'eau pure à savoir H₂O, OH⁻, et H⁺.

Ce procédé de purification peut être, par exemple, un procédé de désalinisation par exemple de l'eau de mer, un procédé de traitement des eaux de productions industrielles, ou un procédé de traitement des lixiviats de décharge.

### ÉTAT DE LA TECHNIQUE ANTÉRIEURE

Parmi les procédés de purification de l'eau, on connaît les procédés de purification faisant appel au phénomène d'osmose.

L'osmose est un phénomène naturel qui est basé sur le principe suivant : lorsque deux solutions aqueuses de concentrations différentes en impuretés telles que des sels, sont séparées par une membrane semi-perméable, c'est-à-dire perméable à l'eau et imperméable aux impuretés telles que des sels, l'eau pure passera de la solution la moins concentrée vers la solution la plus concentrée.

En effet, la membrane semi-perméable empêche le passage des sels dissous dans l'eau, de telle sorte que le transfert d'eau pure est le seul moyen qui permet d'établir l'équilibre de concentration des deux côtés de la membrane.

Une conséquence directe du transfert d'eau pure vers le compartiment contenant la solution concentrée est une élévation de la pression de la solution sur la membrane. Cette pression s'appelle la pression osmotique Posm.

Deux technologies de traitement de l'eau exploitent les propriétés des membranes semi-perméables et le phénomène d'osmose, il s'agit d'une part de la technologie dite d'osmose inverse, et d'autre part de la technologie dite d'osmose directe.

La technologie actuellement la plus développée est la technologie d'osmose inverse. Elle consiste à appliquer à la solution concentrée une pression très supérieure à la pression osmotique pour inverser le flux des molécules d'eau à travers la membrane semi-perméable.

La technologie d'osmose inverse permet de produire une eau de haute pureté, mais c'est une technologie qui met en oeuvre des pressions élevées, très supérieures à la pression osmotique Posm, et dont la consommation d'énergie est très importante. En conséquence, les coûts d'investissement et les coûts d'exploitation des installations d'osmose inverse sont élevés.

L'osmose directe, quant à elle, exploite directement la pression osmotique. Elle consiste à séparer par une membrane semi-perméable la solution à traiter contenant des impuretés tels que des sels, d'une solution très concentrée en un élément chimique sélectionné pour son pouvoir osmotique -appelé agent osmotique- que l'on saura ensuite aisément extraire de l'eau afin d'obtenir une eau pure.

Ainsi, le document US-A- 3,130,156 [1] décrit un appareil d'osmose directe pour produire de l'eau potable à partir d'eau salée dans lequel l'agent osmotique est le bicarbonate d'ammonium qui est éliminé de l'eau par chauffage à une température de 35°C à 60°C pour donner de l'eau, du dioxyde de carbone et de l'ammoniaque.

Le document US-A-3,532,621 [2] décrit un procédé de dessalement de l'eau de mer ou des eaux saumâtres par osmose directe, dans lequel l'agent osmotique est notamment un composé dont la solubilité change de manière importante lors d'une variation de la température ou de la pression de la solution aqueuse qui les contient.

Le document US-B1-6,391,205 [3] concerne un procédé de dessalement de l'eau de mer ou des eaux saumâtres, par osmose directe qui utilise des agents osmotiques dont les solubilités dépendent fortement de la température tels que KNO₃, Na₃PO₄, Na₃PO₄, le saccharose, SO₂, Ce(SO₄)₃, et CO₂.

Le document US-A1-2010/0108587 (US-B2- 8,002,989) [4] et le document WO-A2-2009/155596 décrivent un procédé de dessalement par osmose directe, dans lequel de l'eau est extraite d'une première solution, telle que de l'eau de mer, en utilisant une seconde solution concentrée pour faire passer l'eau pure depuis la première solution vers la seconde solution au travers d'une membrane semi-perméable. La seconde solution contient un agent osmotique qui est choisi de préférence parmi l'ammoniaque et le dioxyde de carbone gazeux et les produits formés lors de leur dissolution dans l'eau, à savoir le carbonate d'ammonium, le bicarbonate d'ammonium, et le carbamate d'ammonium.

Le document de Jeffrey R. Mc Cutcheon et al. « A novel ammonia-carbon dioxide forward (direct) osmosis desalination process », Desalination 174 (2005) 1 - 11 [5] après avoir constaté qu'il n'existait pas d'agent osmotique donnant jusqu'alors satisfaction, propose un procédé de dessalement par osmose inverse qui utilise une solution (« *draw solution* ») de bicarbonate d'ammonium pour extraire l'eau à partir d'une eau saline au travers d'une membrane polymère semi-perméable. Chauffé modérément, le bicarbonate d'ammonium se décompose en ammoniaque et en dioxyde de carbone gazeux, qui peuvent être séparés de l'eau pure produite, et recyclés en tant qu'agents osmotiques.

Le document de Andrea Achilli et al. : « Selection of inorganic-based draw solutions for forward osmosis applications », Journal of Membrane Science 364 (2010), 233-241 [6] décrit un protocole pour choisir les solutions d'agents osmotiques convenant le mieux pour l'osmose directe. Quatorze solutions sont évaluées dans ce document, à savoir des solutions de CaCl₂, Ca(NO₃)₂, KBr, KCl, KHCO₃, K₂SO₄, MgCl₂, MgSO₄ NaCl, NaHCO₃, Na₂SO₄, NH₄Cl, NH₄HCO₃, et (NH₄)₂SO₄.

Le document de Katie S. Bowden et al. : « Organic ionic salt draw solutions for osmotic membrane bioreactors », Bioresource Technology 122(2012), 207-216 [7], concerne l'utilisation de solutions de sels organiques en tant que solutions d'agents osmotiques (« *draw solutions* ») dans des bioréacteurs à membrane osmotique. Bien que les coûts de renouvellement des sels organiques soient légèrement supérieurs à ceux des sels minéraux, leur efficacité et leur potentiel de biodégradation font qu'ils conviennent particulièrement bien à une utilisation dans les bioréacteurs à membrane osmotique. Le documents US-B1-7,560,028 et WO-A1-2013/049253 divulguent des procédés pour la production d'eau potable à partir d' eaux polluées ou salines par utilisation des clathrates hydrates avec la formation des clathrates hydrates dans les eaux à traiter, la séparation des clathrates hydrates et des eaux, la dissociation des clathrates hydrates séparés pour obtenir de l'eau pure et la récupération des clathrates. Il ressort de ce qui précède que la capacité de la technologie d'osmose directe à purifier l'eau de manière économique passe par la sélection d'un agent osmotique efficace répondant à deux critères principaux :
- l'agent osmotique doit favoriser une bonne efficacité de la membrane -à savoir un fort pouvoir osmotique réel en tenant compte des phénomènes de polarisation de la membrane et des flux ioniques inverses- pour optimiser la surface filtrante et donc le coût des membranes;
- l'agent osmotique doit pouvoir être facilement extrait, séparé, de la solution concentrée du côté de la membrane semi-perméable opposé à la solution à purifier, pour récupérer une eau d'une pureté optimale.

Une autre exigence à laquelle doit également répondre l'agent osmotique est son innocuité dans le cas de la production d'eau potable. Le coût de l'agent osmotique est également à prendre en compte.

La plupart des documents cités plus haut concernant des procédés de purification, notamment de dessalement, par osmose inverse, ont pour objet le choix d'un agent osmotique présentant le meilleur compromis entre les deux exigences principales susmentionnées.

Jusqu'à présent, aucun agent osmotique n'a cependant donné pleinement satisfaction et permis d'obtenir un compromis acceptable.

A ce jour, il semble cependant que le meilleur compromis soit obtenu avec un agent osmotique constitué de carbonate d'ammonium, de bicarbonate d'ammonium et de carbamate d'ammonium. En fait, il s'agit-là d'une famille de composés à base d'ammoniac et de gaz carbonique qui peuvent coexister en solution.

Le principal atout de cet agent osmotique réside dans le fait qu'il peut être extrait sous forme gazeuse en tant qu'ammoniac, gaz carbonique et eau, tandis que son pouvoir osmotique reste acceptable.

Toutefois, afin de réaliser cette extraction, la solution doit être chauffée à une température de 60°C à 100°C ce qui, du fait de la présence d'eau, implique une importante consommation d'énergie. Ensuite, l'ammoniac et le gaz carbonique réagissent pour redonner l'agent osmotique tel que le bicarbonate d'ammonium qui est ensuite recristallisé en vue de son recyclage dans la solution. Or, l'opération de recristallisation est complexe et forte consommatrice d'énergie, et l'opération de réinjection de l'agent osmotique dans l'eau est, de même, complexe.

Il apparaît donc que, même si l'extraction des agents osmotiques cités plus haut, à savoir le carbonate d'ammonium, le bicarbonate d'ammonium et le carbamate d'ammonium, est plus facile que celles de la plupart des autres agents osmotiques actuellement mis en oeuvre dans les procédés d'osmose directe, elle comporte encore certains inconvénients et elle n'est pas totalement satisfaisante. Notamment elle ne permet pas de traiter des solutions très concentrées, notamment en NaCl excédant par exemple des concentrations de l'ordre de 150 g/l.

Par ailleurs, le document [6] met en évidence que de nombreux composés possèdent de biens meilleures aptitudes osmotiques que la famille des carbonates d'ammonium tels que le carbonate d'ammonium, le bicarbonate d'ammonium et le carbamate d'ammonium , mais que leur mise en oeuvre en tant qu'agent osmotique dans un procédé d'osmose directe n'est pas envisagée du fait des problèmes auxquels se heurte l'extraction, séparation, de tels composés.

Il existe donc, au regard de ce qui précède, un besoin pour un procédé de purification d'un liquide tel que de l'eau par osmose directe qui ne présente pas les inconvénients, défauts, limitations et désavantage des procédés de purification par osmose directe de l'art antérieur, représentés notamment par les documents cités plus haut, et qui résolve les problèmes des procédés de purification d'un liquide par osmose directe de l'art antérieur notamment en ce qui concerne le choix de l'agent osmotique.

En particulier, il existe un besoin pour un procédé de purification d'un liquide par osmose directe qui ne présente pas les limitations des procédés de l'art antérieur quant au choix de l'agent osmotique dues notamment aux difficultés rencontrées lors de la séparation de cet agent.

Il existe enfin un réel besoin pour un procédé permettant de traiter par osmose directe des solutions très concentrées notamment en NaCl, par exemple au-delà de concentrations de l'ordre de 150 g/l.

Le but de la présente invention est de fournir un procédé et une installation qui répondent ente autres à ces besoins.

### EXPOSÉ DE L'INVENTION

Ce but et d'autres encore sont atteints, conformément à l'invention par un procédé de purification d'un premier liquide comprenant de l'eau et au moins une impureté par osmose directe, dans lequel on réalise les étapes successives suivantes :
a) on met en contact le premier liquide avec un premier côté d'une membrane semi-perméable, un second liquide aqueux contenant un agent osmotique étant en contact avec le second côté de la membrane semi-perméable, moyennant quoi l'eau est extraite par osmose directe du premier liquide au travers de la membrane semi-perméable et passe dans le second liquide contenant l'agent osmotique ;
b) on forme des clathrates hydrates d'une molécule hôte dans le second liquide contenant l'agent osmotique dans lequel l'eau est passée ;
c) on sépare les clathrates hydrates du second liquide contenant l'agent osmotique ; et
d) on dissocie les clathrates hydrates séparées pour obtenir de l'eau pure et la molécule hôte.

Le second liquide, par exemple la seconde solution, contenant l'agent osmotique peut être appelé liquide drainant, par exemple solution drainante.

Le procédé selon l'invention comprend une suite spécifique d'étapes spécifiques qui n'a jamais été décrite dans l'art antérieur.

Le procédé selon l'invention associe la technique de l'osmose directe et la technique de cristallisation de clathrates hydrates.

L'association de ces deux techniques n'a pas été décrite ou suggérée dans l'art antérieur.

Le procédé selon l'invention en associant ces deux techniques ne présente plus tous les inconvénients des procédés de purification par osmose directe de l'art antérieur, car il n'est plus nécessaire de séparer l'agent osmotique du second liquide, l'eau pure étant récupérée à partir de ce second liquide contenant l'agent osmotique par cristallisation puis dissociation de clathrates hydrates.

Rappelons que le mot « clathrate » provient du grec « Klathron » qui signifie fermeture. Les clathrates désignent une famille de structures cristallines sous forme de cage capable de piéger en leur coeur une molécule dite molécule hôte.

Dans le cas des hydrates, les molécules d'eau s'organisent sous forme de cage uniquement maintenue par des liaisons faibles du type liaison hydrogène et piègent en leur coeur une molécule hôte.

Les clathrates les plus connus sont les gaz-hydrates qui comprennent une molécule hôte qui est gazeuse comme le méthane, l'éthane, le butane, le propane, le sulfure d'hydrogène, ou le gaz carbonique. Ces gaz-hydrates et qui se forment dans des conditions de pression et de température bien précises, à savoir (généralement à des pressions de plusieurs dizaines d'atmosphères et à des températures légèrement supérieures à 0°C) en fonction de la nature du ou des gaz. Certains hydrocarbures, comme le clathrate de cyclopentane, cristallisent cependant sous pression atmosphérique jusqu'à 7°C.

Par leur nature « anionique » structurelle, les clathrates hydrates ont la singularité de cristalliser de manière très sélective, c'est-à-dire sans inclure d'impuretés au sein de leur édifice cristallin. Leur cristallisation est donc quasiment indépendante de la nature et de la concentration des différentes impuretés présentes dans la solution, seule la température de cristallisation du clathrate hydrate est susceptible de varier en fonction de la nature et de la concentration en impuretés.

Dans une solution riche en impuretés et contenant des molécules hôtes susceptibles de former un clathrate, la cristallisation de l'hydrate en pompant des molécules d'eau contribue à concentrer la solution en impuretés. En d'autres termes, la cristallisation du clathrate a pour effet d'extraire les molécules d'eau de la solution tant que les molécules hôtes sont disponibles.

Une fois séparé de la phase liquide, la fusion de l'hydrate permet d'obtenir à des températures comprises entre 0 et 10°C une eau d'une extrême pureté si la molécule hôte est aisément séparable sous forme de gaz ou par décantation pour les hydrocarbures insolubles tels que le cyclopentane.

En conditions maîtrisées, la cristallisation de clathrates hydrates, notamment de cyclopentane, est relativement aisée.

L'ensemble du cycle allant jusqu'à la récupération d'eau ultra-pure est très peu consommateur d'énergie puisque la nature exothermique de la cristallisation et la nature endothermique de la dissociation permettent la mise en place d'une boucle thermique.

Selon l'invention, en couplant les deux technologies de l'osmose directe et de la cristallisation des clathrates hydrates, il est possible de fournir un procédé global optimisé de purification d'un liquide, en particulier d'une eau chargée en impuretés.

La technique de cristallisation des clathrates hydrates utilisée pour la production d'eau pure, du fait qu'elle peut être mise en oeuvre indépendamment de la nature des composés qui se trouvent dans le second liquide à savoir essentiellement l'agent osmotique, permet de sélectionner le meilleur agent osmotique pour optimiser l'étape initiale d'osmose directe sans se soucier de l'extraction ultérieure de cet agent osmotique, pour la simple raison que cet agent n'est pas extrait du second liquide.

L'osmose directe en mettant en oeuvre généralement une solution synthétique drainante d'agent osmotique stable et maîtrisée, (comparativement aux différentes solutions que l'on voudra purifier) permet quant à elle d'optimiser l'extraction de l'eau ultra-pure par la voie clathrate.

On peut dire que le procédé selon l'invention associe de manière synergique la technique d'osmose directe et la technique de cristallisation de clathrates hydrates.

Le procédé selon l'invention élargit considérablement le choix des agents osmotiques, car ce choix est fait sur le seul et unique critère de leur efficacité osmotique, sans avoir à tenir compte de leur séparation.

En d'autres termes, le second critère énoncé plus haut ne rentre plus en compte dans le choix de l'agent osmotique.

Avantageusement, le procédé selon l'invention est réalisé en continu.

Le premier liquide peut être une solution contenant des impuretés dissoutes ou une suspension contenant des impuretés dispersées, en suspension, ou bien encore une solution contenant des impuretés dissoutes et des impuretés en suspension dans ladite solution.

Généralement, le premier liquide et le second liquide peuvent être des solutions aqueuses.

Il n'existe aucune limitation sur la ou les impuretés que contient le premier liquide et le procédé selon l'invention assure la purification de liquides quelles que soient les impuretés qu'ils contiennent.

Par impureté, comme on l'a déjà précisé, on entend tout élément, molécule, ion, ou autre, différent des éléments constitutifs de l'eau pure, à savoir H₂O, OH⁻, et H⁺.

L'impureté peut être notamment choisie parmi les sels minéraux tels que NaCl, les sels organiques, les composés organiques solubles dans l'eau, et leurs mélanges.

Le procédé selon l'invention assure également la purification de liquides qui possèdent de larges gammes de concentrations en impuretés.

Le premier liquide peut avoir notamment une concentration en impureté(s) de 1 mg/L à 500 g/L, de préférence de 100 mg/L à 250 g/L.

Il n'existe en conséquence également aucune limitation sur la nature du liquide qui peut être traité par le procédé selon l'invention.

Le premier liquide peut ainsi être notamment choisi parmi l'eau de mer ; les eaux saumâtres ; les lixiviats de décharges publiques ; les eaux de production pétrolière ; les eaux d'extraction du gaz de schiste par la technique de fracturation hydraulique ; les liquides de l'industrie agroalimentaire tels que les jus de fruits ou le café ; les liquides de l'industrie pharmaceutique ; les liquides de l'industrie chimique ; les effluents miniers, par exemple les rejets miniers chargés en sulfates, phosphates ou carbonates ; les effluents de l'industrie métallurgique; les effluents de l'industrie nucléaire ; les concentrâts d'osmose inverse ; les solutions entartrantes ; les effluents de l'industrie papetière ; les aquifères salins.

Le procédé selon l'invention permet notamment de traiter des solutions très concentrées en impuretés, notamment en NaCl, par exemple avec des concentrations au-delà de 150 g/L.

Le premier liquide peut donc être choisi parmi les solutions aqueuses de NaCl dont la concentration en NaCl est supérieure à 150 g/L.

Selon un des avantages essentiels du procédé selon l'invention, l'agent osmotique peut être choisi indépendamment de son aptitude à être séparé du second liquide, et le choix de cet agent osmotique n'est donc absolument plus limité, contrairement aux procédés de purification par osmose directe de l'art antérieur.

Les critères qui vont régir le choix de l'agent osmotique sont donc des critères liés intrinsèquement au procédé d'osmose directe et plus du tout à son aptitude à être séparé.

L'agent osmotique est généralement choisi en prenant comme critère de choix l'efficacité osmotique et éventuellement la rentabilité économique du procédé suivant la nature de la solution à purifier.

L'agent osmotique peut être choisi notamment parmi les sels, notamment les sels minéraux, les composés ioniques, les protéines, et les glucides.

L'agent osmotique peut être choisi par exemple parmi tous les composés cités dans les documents [1] à [7], au contenu desquels on pourra se reporter à cet égard.

Parmi les sels, on peut citer NaCl, NH₄Cl, MgCl₂, NaHCO₃, Na₂SO₄, KCl, KHCO₃, NH₄HCO₃, (NH₄)SO₄, K₂SO₄, KBr, Ca(NO₃)₂, MgSO₄, CaCl₂ etc.

Un agent osmotique préféré est le chlorure de sodium NaCl. En effet, il s'est avéré que ce sel était un agent osmotique qui présentait des propriétés optimales pour une utilisation dans le procédé selon l'invention, car il possède un très grand pouvoir osmotique, sans altérer la formation des clathrates hydrates par cristallisation, et ces clathrates hydrates peuvent être facilement séparés.

Avantageusement, le second liquide aqueux est un liquide aqueux synthétique, tel qu'une solution aqueuse synthétique, de composition et de concentration contrôlées ; en d'autres termes, de composition et de concentration maîtrisées, déterminées, précisément connues.

De préférence, le second liquide aqueux, tel qu'une solution aqueuse, est constitué uniquement par de l'eau et l'agent osmotique, et sa composition est donc ainsi parfaitement contrôlée ; et la concentration de l'agent osmotique est également contrôlée, maîtrisée.

Par liquide aqueux synthétique, on entend que ce liquide peut être préparé, synthétisé, de manière parfaitement maitrisée à partir de ses composants, à savoir de préférence uniquement l'eau et l'agent osmotique voulu à une concentration précisément déterminée, aux fins d'une utilisation dans le procédé selon l'invention.

Dans le second liquide, et du fait qu'il s'agit précisément d'un liquide synthétique, l'agent osmotique et sa concentration peuvent être choisis de façon à être étroitement adaptés (« sur mesure ») au premier liquide à traiter.

Généralement, la concentration de l'agent osmotique dans le second liquide est adaptée de manière à générer un gradient de pression osmotique avec la concentration des impuretés dans le premier liquide à purifier suffisant pour drainer les molécules d'eau, du premier liquide, tel qu'une solution à purifier vers le second liquide.

La concentration de l'agent osmotique dans le second liquide dépend donc généralement de la nature et de la concentration des impuretés dans la premier liquide, tel qu'une solution, à purifier.

Cette concentration pourra être facilement déterminée par l'homme du métier qui procédera en conséquence à la synthèse du second liquide.

La molécule hôte peut être notamment choisie parmi les gaz de faible masse moléculaire comme l'oxygène, l'azote, le CO₂, le H₂S, l'argon, le krypton et le Xénon ou encore parmi les hydrocarbures halogénés, ou les hydrocarbures gazeux comme le méthane, le propane, l'éthane et le butane.

Les molécules hôtes gazeuses nécessitent des pressions élevées.

Avantageusement, la molécule hôte est choisie parmi les molécules hôtes qui permettent de cristalliser des clathrates hydrates à la pression atmosphérique et à des températures supérieures à celle de la cristallisation de la glace.

Avantageusement, la molécule-hôte est immiscible dans l'eau.

Avantageusement, la molécule hôte est choisie parmi les molécules qui forment un clathrate hydrate ayant une densité inférieure à la densité du second liquide, par exemple inférieure à 1,3, de préférence inférieure à 1,0.

Une molécule hôte préférée est le cyclopentane ou le cyclohexane.

En effet, le clathrate hydrate de cyclopentane associe 17 molécules d'eau par molécule de cyclopentane dans la structure [C₅H₁₀].17H₂O.

Le cyclopentane permet de cristalliser des clathrates hydrates sous pression atmosphérique à des températures supérieures à la température de cristallisation de la glace, puisque le clathrate hydrate de cyclopentane présente une température de cristallisation (ou température d'équilibre) d'environ 7°C en présence d'eau pure.

Le cyclopentane est à l'état liquide dans les conditions normales. Il est immiscible dans l'eau et permet de cristalliser des clathrates hydrates de densité inférieure à celle de l'eau, car le clathrate hydrate de cyclopentane a une densité de 0,95.

Avantageusement, le second liquide contenant l'agent osmotique séparé dans l'étape c) est renvoyé du second côté de la membrane semi-perméable.

Il n'est donc pas nécessaire de séparer l'agent osmotique ce qui est particulièrement avantageux et diminue le coût global du procédé selon l'invention.

Avantageusement, la molécule hôte obtenue dans l'étape d) est renvoyée dans l'étape b).

Grâce à ce recyclage, la consommation de molécule hôte se trouve considérablement réduite, ce qui diminue également le coût global du procédé selon l'invention.

L'invention concerne également une installation pour la mise en oeuvre du procédé tel que décrit dans ce qui précède, pour purifier un premier liquide comprenant de l'eau et au moins une impureté par osmose directe, ladite installation comprenant :
- une enceinte osmotique séparée en une première chambre et en une seconde chambre par une membrane semi-perméable ;
- des moyens pour envoyer un premier liquide comprenant de l'eau et au moins une impureté dans la première chambre pour être en contact avec un premier côté de la membrane semi-perméable ;
- des moyens pour envoyer un second liquide aqueux contenant un agent osmotique dans la seconde chambre pour être en contact avec un second côté de la membrane semi-perméable ;
- un réacteur de cristallisation et de croissance de clathrates hydrates dans lequel on forme des clathrates hydrates d'une molécule hôte dans le second liquide contenant l'agent osmotique ;
- des moyens pour soutirer le second liquide dans la seconde chambre de l'enceinte osmotique et l'envoyer dans le réacteur de cristallisation et de croissance des clathrates hydrates ;
- des moyens pour séparer les clathrates hydrates du second liquide contenant l'agent osmotique ; et
- des moyens pour dissocier les clathrates hydrates séparés dans les moyens pour séparer les clathrates hydrates du second liquide, pour obtenir de l'eau pure et la molécule hôte.

Avantageusement, ladite installation peut comprendre en outre des moyens pour renvoyer le second liquide contenant l'agent osmotique séparé dans les moyens pour séparer les clathrates hydrates du second liquide, dans la seconde chambre de l'enceinte osmotique.

Avantageusement, ladite installation peut comprendre en outre des moyens pour renvoyer la molécule hôte obtenue dans les moyens pour dissocier les clathrates hydrates dans le réacteur de cristallisation et de croissance de clathrates hydrates.

### BRÈVE DESCRIPTION DES DESSINS

- La Figure 1 est un schéma de principe (« flow-sheet ») simplifié, qui illustre une forme de réalisation du procédé selon l'invention.
- La Figure 2 est un schéma qui illustre une installation pour la mise en oeuvre du procédé selon l'invention, ainsi que la mise en oeuvre du procédé selon l'invention dans cette installation.

### EXPOSÉ DÉTAILLÉ DE MODES DE RÉALISATION PARTICULIERS

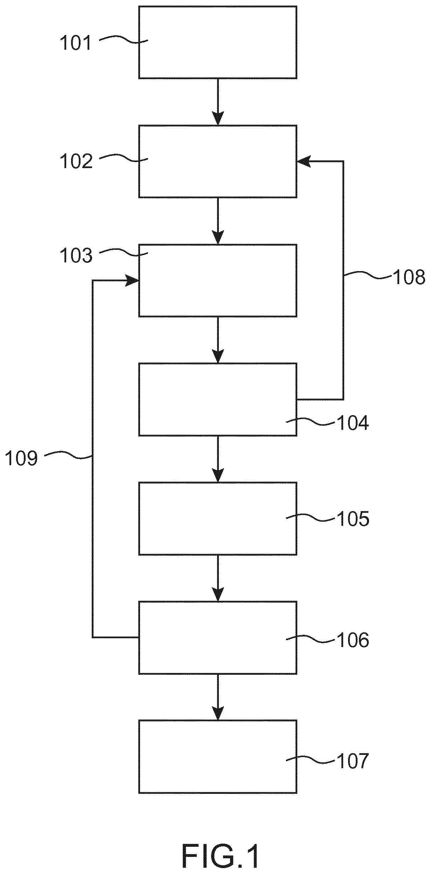

La Figure 1 est un schéma de principe (« flow-sheet ») simplifié, qui illustre une forme de réalisation du procédé selon l'invention pour purifier une eau chargée en impuretés, telle qu'une solution aqueuse chargée en impuretés, par exemple une solution aqueuse saline contenant majoritairement du NaCl et d'autres impuretés, telle que l'eau de mer.

Il est bien évident que cette solution aqueuse saline n'est donnée qu'à titre d'exemple et que le procédé illustré sur la Figure 1 peut être utilisé pour purifier toute eau chargée en impuretés.

Dans ce procédé, on fournit de l'eau contenant des impuretés 101 formant par exemple une première solution, et dans une première étape 102, cette eau contenant des impuretés est traitée par osmose directe, et l'eau est extraite de cette première solution sous l'effet d'un phénomène d'osmose directe à travers une membrane semi-perméable jusque dans une seconde solution aqueuse contenant un agent osmotique.

Cette seconde solution aqueuse est généralement appelée solution drainante.

Cette seconde solution aqueuse est généralement une solution synthétique qui est constituée uniquement par de l'eau et par l'agent osmotique à une concentration déterminée. Cette solution ne contient donc qu'un seul type de composé en solution, au contraire de la solution aqueuse à purifier.

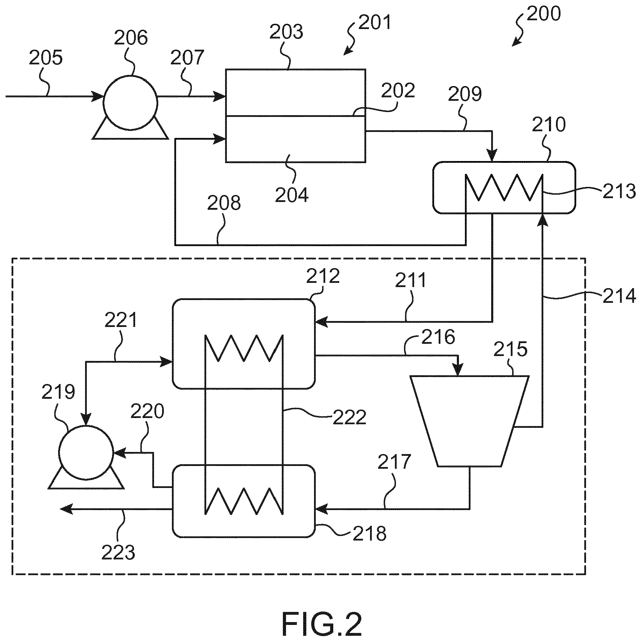

Dans l'installation représentée sur la Figure 2, cette étape 102 est réalisée dans le réacteur 201.

Lors d'une deuxième étape du procédé 103, des clathrates hydrates sont formés dans la seconde solution, en introduisant des molécules hôtes dans la seconde solution.

Dans l'installation représentée sur la Figure 2, les clathrates hydrates sont formés dans le réacteur de cristallisation et de croissance 212.

Les clathrates qui ont été ainsi formés dans la seconde solution sont ensuite séparés de cette solution lors de l'étape suivante 104.

Dans l'installation représentée sur la Figure 2, la séparation des clathres hydrates a lieu dans le séparateur 215.

Les clathrates hydrates séparés sont ensuite dissociés dans une étape de dissociation 105 pour donner un mélange de molécules hôtes et d'eau purifiée.

Les molécules hôtes sont séparées du mélange lors d'une étape 106, et l'on obtient ainsi de l'eau purifiée 107 qui peut être recyclée.

Dans l'installation représentée sur la Figure 2, la dissociation a lieu dans le réacteur de dissociation des clathrates hydrates 218.

Dans le procédé décrit sur la Figure 1, le procédé d'osmose directe 102 extrait l'eau de la première solution jusque dans la seconde solution, et la formation de clathrates hydrates 103 dans la seconde solution puis leur dissociation 105, associée au procédé d'osmose directe permettent d'obtenir ainsi à partir de la première solution, à l'issue du procédé, une eau purifiée 107, en tant que produit final qui est récupérée et qui peut être utilisée.

La seconde solution contenant l'agent osmotique qui est obtenue lors de l'étape 104 après séparation des clathrates hydrates de ladite seconde solution, est recyclée vers l'étape d'osmose directe 102 pour y être utilisée de nouveau. Le recyclage de la seconde solution vers l'étape d'osmose 102 est illustré par la flèche 108 sur la Figure 1.

De la même manière, les molécules hôtes qui sont recueillies lors de l'étape de séparation 106 peuvent être recyclées dans l'étape de formation des clathrates hydrates 103. Le recyclage des molécules hôtes vers l'étape de formation des clathrates hydrates est illustré par la flèche 109 sur la Figure 1.

La Figure 2 est une vue schématique qui montre une forme de réalisation d'une installation pour la mise en oeuvre du procédé selon l'invention, mis en oeuvre en continu, pour purifier une eau chargée en impuretés, telle qu'une solution aqueuse chargée en impuretés, par exemple une solution aqueuse saline contenant majoritairement du NaCl et d'autres impuretés.

Il est bien évident que cette solution aqueuse saline n'est donnée qu'à titre d'exemple et que le procédé illustré sur la Figure 2 peut être utilisé pour purifier toute eau chargée en impuretés.

L'installation de la Figure 2, que l'on peut appeler installation de purification 200 comprend tout d'abord un réacteur ou enceinte osmotique 201 qui est séparé par une membrane semi-perméable 202 en un premier compartiment ou chambre 203 et en un second compartiment ou chambre 204.

L'eau chargée en impuretés à purifier forme un premier courant qui est introduit dans l'installation par la canalisation 205, puis est envoyé par l'intermédiaire d'une pompe 206 et d'une canalisation 207 dans le premier compartiment ou chambre 203 du réacteur osmotique 201.

Une solution dite solution d'agent osmotique, comprenant de l'eau et un agent osmotique, tel que NaCl, forme un deuxième courant, qui est acheminé par l'intermédiaire d'une canalisation 208 dans le second compartiment 204 du réacteur osmotique 201.

La solution d'agent osmotique est généralement une solution que l'on peut qualifier de solution synthétique contrôlée. Cela signifie que la composition et la concentration de cette solution sont parfaitement maîtrisées et qu'elle ne contient pas ou quasiment pas à côté de l'agent osmotique, d'impuretés et de substances indésirables. En particulier, le choix de l'agent osmotique ainsi que sa concentration sont parfaitement maîtrisés. On peut ainsi notamment, maîtriser, régler, ajuster de manière précise, le pouvoir, potentiel osmotique de la solution d'agent osmotique.

Selon l'invention et c'est là un des avantages du procédé selon l'invention par rapport aux procédés d'osmose inverse de l'art antérieur qui ne sont pas associés à une technique de cristallisation des clathrates hydrates, il n'existe aucune limitation quant au choix de l'agent osmotique.

En effet, ce choix n'est pas restreint par les problèmes liés à la récupération, à la régénération, et au recyclage de certains agents osmotiques, puisque l'eau est purifiée par la technique de cristallisation des clathrates hydrates et non en séparant l'agent osmotique de la solution le contenant.

L'agent osmotique peut être choisi par exemple parmi les sels, les composés ioniques et les protéines.

Dans un mode de réalisation préféré, l'agent osmotique est le chlorure de sodium NaCl.

D'autres agents osmotiques qui peuvent aussi être utilisés sont les sels cités plus haut.

Le choix de l'agent osmotique selon l'invention n'étant aucunement limité, ce choix peut être fait afin de satisfaire à un ou plusieurs critères qui peuvent, pour la plupart, être librement choisis.

Tous les critères exposés ci-après pourraient être en fait regroupés sous un seul et unique critère global qui est le critère de l'efficacité osmotique.

Un premier critère obligatoire qui gouverne le choix de l'agent osmotique est que l'agent osmotique doit être capable de créer un flux d'eau à travers la membrane semi-perméable depuis le premier compartiment vers le second compartiment du réacteur osmotique. Ce critère est impératif, car sinon il n'y a tout simplement pas d'osmose.

Un autre critère, qui est facultatif et préférable, est que la diffusion inverse de l'agent osmotique depuis le second compartiment vers le premier compartiment doit être limitée. En effet, dans le cas contraire la perte d'efficacité est importante.

Selon encore un autre critère, l'agent osmotique peut être choisi afin d'obtenir un flux d'eau par unité de surface de la membrane semi-perméable stable et le plus élevé possible, en d'autres termes, afin d'obtenir un rendement élevé de la membrane. Un agent osmotique qui répond à ces critères est le NaCl.

Là-encore, pour satisfaire à ces critères, le choix de l'agent osmotique n'est pas limité par la récupération ou la régénération de l'agent osmotique dans une phase ultérieure.

Un autre critère ou un critère supplémentaire qui pourrait éventuellement gouverner le choix de l'agent osmotique est la membrane semi-perméable utilisée, mais ce critère n'est pas primordial. Un des avantages de choisir l'agent osmotique en fonction du type de membrane utilisée est que le procédé osmotique peut être optimisé.

A tous les critères obligatoires ou facultatifs énumérés plus haut qui rentrent tous dans le cadre global du critère d'efficacité osmotique on peut ajouter, le critère économique à savoir le coût de l'agent osmotique, même si, généralement, celui-ci reste en permanence dans la seconde solution ou solution drainante et ne doit donc pas être constamment renouvelé.

La solution d'agent osmotique formant le deuxième courant, qui est acheminé par l'intermédiaire de la canalisation 208 dans le second compartiment ou chambre 204 du réacteur ou enceinte osmotique 201 est une solution que l'on peut qualifier de solution drainante.

Il est à noter que la concentration en agent osmotique de cette solution drainante peut être, mais n'est pas obligatoirement, supérieure à la concentration en impuretés de la solution à traiter.

En effet même si une concentration plus élevée en agent osmotique accroît la pression osmotique, c'est toutefois la nature de l'agent osmotique qui prévaut. Certains agents osmotiques peuvent ainsi générer des pressions osmotiques supérieures tout en ayant des concentrations inférieures à la teneur en impureté(s) de la solution à purifier.

L'eau pure, issue de l'eau chargée en impuretés à purifier, passe sous l'effet de l'osmose inverse à travers la membrane semi-perméable 202 depuis le compartiment 203 jusque dans le compartiment 204 du réacteur osmotique 201.

Il se forme ainsi dans le compartiment 204 une solution d'agent osmotique qui est diluée par rapport à la solution d'agent osmotique, relativement plus concentrée, initialement présente dans le compartiment 204 et qui avait été envoyée dans celui-ci par l'intermédiaire de la canalisation 208.

La solution d'agent osmotique diluée est évacuée du second compartiment 204 par l'intermédiaire d'une canalisation 209, qui achemine cette solution dans un dispositif réfrigérant 210. Cette solution est ensuite envoyée par l'intermédiaire d'une canalisation 211, dans un réacteur de cristallisation et de croissance des clathrates hydrates 212 dans lequel se trouvent des molécules hôtes.

Le dispositif réfrigérant 210 comprend un échangeur de chaleur 213 dans lequel se produit un échange de chaleur entre la solution d'agent osmotique diluée et la solution d'agent osmotique (voir plus bas) qui circule dans une canalisation 214 puis dans la canalisation 208.

Les échangeurs de chaleur adéquats sont connus de l'homme du métier et ne seront donc pas décrits plus en détail.

L'eau contenue dans la solution d'agent osmotique diluée refroidie acheminée par la canalisation 211, et les molécules hôtes qui se trouvent dans le réacteur 212 forment des clathrates hydrates qui croissent dans ce réacteur de cristallisation et de croissance des clathrates hydrates 212.

En tant que molécule hôte, on peut utiliser de préférence le cyclopentane, mais d'autres molécules hôtes peuvent aussi être utilisées, par exemple des molécules gazeuses comme le méthane, l'éthane, le butane, le propane, le sulfure d'hydrogène, le gaz carbonique, ou leurs mélanges.

Généralement, la molécule hôte est choisie de façon à ne pas influencer le reste du procédé. En conséquence, la molécule hôte peut être choisie selon des critères économiques ou autres.

Il est particulièrement avantageux d'utiliser le cyclopentane comme molécule hôte, car il permet de former les clathrates hydrates dans le réacteur de cristallisation des clathrates 212 à la pression atmosphérique, à savoir sous une pression de 1 bar et à une température généralement située entre -20°C et 6° C.

Il est à noter que la température à laquelle les clathrates hydrates se forment dans le réacteur 212 dépend de la concentration de l'agent osmotique dans le réacteur 212. En effet, généralement, la concentration en agent osmotique abaisse la température de cristallisation des clathrates.

Comme de l'eau est utilisée pour former les clathrates hydrates dans le réacteur 212, on obtient donc dans le réacteur 212 une suspension de clathrates hydrates dans une solution concentrée en agent osmotique.

La suspension de clathrates hydrates dans une solution concentrée en agent osmotique formée dans le réacteur 212, est soutirée dans le réacteur 212, et est envoyée dans un séparateur 215 par l'intermédiaire d'une canalisation 216.

Dans le séparateur, on sépare les clathrates hydrates de la solution concentrée en agent osmotique en mettant en oeuvre une technique de séparation liquide/solide.

La technique de séparation liquide/solide utilisée pour séparer les clathrates hydrates de la solution concentrée dépendra du type de clathrates hydrate mais aussi d'autres facteurs. L'homme du métier choisira facilement la technique adéquate en fonction des propriétés des clathrates hydrates comme par exemple leur granulométrie.

Cette technique de séparation liquide/solide peut être choisie par exemple parmi toutes les techniques classiques de séparation liquide/solide, telles que la filtration par exemple avec un filtre presse, la centrifugation.

La solution concentrée en agent osmotique séparée dans le séparateur 215 et qui ne contient donc plus de clathrates hydrates est soutirée, à partir du séparateur 215, par l'intermédiaire de la canalisation 214 qui alimente l'échangeur de chaleur 213 afin de refroidir la solution diluée en agent osmotique 209 dans le dispositif réfrigérant 210.

La solution concentrée en agent osmotique est ensuite acheminée par l'intermédiaire de la canalisation 208 dans le second compartiment 204 du réacteur osmotique 201.

On constate donc que dans l'installation de la Figure 2, le flux de solution contenant l'agent osmotique forme une boucle fermée, et l'agent osmotique est recyclé dans le second compartiment 204 du réacteur osmotique 201.

La consommation en agent osmotique se trouve donc limitée à la quantité initialement nécessaire pour former la solution concentrée en agent osmotique et éventuellement à des apports limités lorsque l'installation 200 est en fonctionnement.

Comme dans l'installation de la Figure 2, la solution d'agent osmotique est recyclée, il n'est pas nécessaire de récupérer l'agent osmotique, et l'agent osmotique peut donc être choisi indépendamment de sa capacité à être récupéré, régénéré.

Les clathrates hydrates séparés dans le séparateur 215 sont soutirés dans le séparateur 215 par l'intermédiaire d'une canalisation 217 et acheminés dans un réacteur de dissociation des clathrates hydrates 218, où les clathrates hydrates sont séparés en molécules hôtes et en eau purifiée.

Toute technique de dissociation connue peut être utilisée. Généralement, la dissociation des cristaux d'hydrate cristallisés en eau et en molécules hôtes est réalisée par une augmentation de température conduisant à leur fusion. Autrement dit, les cristaux d'hydrate cristallisés sont fondus.

Ensuite l'eau purifiée et les molécules hôtes sont séparées par décantation ou dégazage.

Le choix de l'une ou l'autre des techniques de décantation ou de dégazage est fait selon la nature plus ou moins volatile de la molécule hôte.

Ainsi, dans le cas où la molécule hôte est un liquide non miscible avec l'eau et qui possède une densité inférieure à celle de l'eau comme le cyclopentane, la dissociation par fusion des clathrates hydrates dans le réacteur 218 forme une émulsion qui est introduite dans un décanteur (non représenté) pour séparer l'eau purifiée de la molécule hôte. La molécule hôte est recyclée dans réacteur 212 au moyen d'une pompe et de canalisations 220 et 221.

Dans le cas où la molécule hôte est un gaz, et comme cela est plus particulièrement représenté sur la Figure 2, les molécules hôtes gazeuses sont récupérées directement dans le réacteur de dissociation et recyclées dans réacteur 212 au moyen d'une pompe 219 et de canalisations 220 et 221.

Dans l'installation selon l'invention, les molécules hôtes sont donc recyclées et utilisées de nouveau ce qui accroît la rentabilité de l'installation.

L'installation 200 représentée sur la Figure 2 comprend un second échangeur de chaleur 222 qui fonctionne entre le réacteur de cristallisation et de croissance des clathrates hydrates 212 et le réacteur de dissociation des clathrates hydrates 218 pour récupérer l'énergie thermique libérée par la formation des clathrates hydrates dans le réacteur de cristallisation et de croissance des clathrates hydrates 212.

Ce second échangeur est généralement une pompe à chaleur classique.

Le cycle thermique mis en oeuvre dans l'échangeur de chaleur 222 utilise très peu d'énergie, car la nature exothermique de la cristallisation et la nature endothermique de la dissociation permet de former une boucle thermique.

L'eau purifiée est évacuée du réacteur 218 ou du décanteur par l'intermédiaire d'une canalisation 223 et peut être utilisée.

La partie de l'installation 200 délimitée par un trait pointillé sur la Figure 2 correspond à la partie de l'installation et du procédé qui fait intervenir les clathrates hydrates, tandis que la partie qui n'est pas délimitée par un trait pointillé correspond à la partie de l'installation et du procédé qui fait intervenir l'osmose inverse.

Il est bien évident que, à partir du moment où, conformément au principe de base du procédé selon l'invention, ces deux parties sont combinées, elles pourraient être disposées d'une manière différente de celle montrée sur la Figure 2.

## Revendications

1. Procédé de purification d'un premier liquide comprenant de l'eau et au moins une impureté par osmose directe, dans lequel on réalise les étapes successives suivantes :
a) on met en contact le premier liquide avec un premier côté d'une membrane semi-perméable, un second liquide aqueux contenant un agent osmotique étant en contact avec le second côté de la membrane semi-perméable, moyennant quoi l'eau est extraite par osmose directe du premier liquide au travers de la membrane semi-perméable et passe dans le second liquide contenant l'agent osmotique ;
b) on forme des clathrates hydrates d'une molécule hôte dans le second liquide contenant l'agent osmotique dans lequel l'eau est passée ;
c) on sépare les clathrates hydrates du second liquide contenant l'agent osmotique ; et
d) on dissocie les clathrates hydrates séparés pour obtenir de l'eau pure et la molécule hôte.

2. Procédé selon la revendication 1, qui est réalisé en continu.

3. Procédé selon l'une quelconque des revendications précédentes, dans lequel le premier liquide et le second liquide sont des solutions aqueuses.

4. Procédé selon l'une quelconque des revendications précédentes, dans lequel l'impureté est tout élément, molécule, ion, ou autre, différent des éléments constitutifs de l'eau pure, à savoir H₂O, OH⁻, et H⁺.

5. Procédé selon l'une quelconque des revendications précédentes, dans lequel l'impureté est choisie parmi les sels minéraux tels que NaCl, les sels organiques, les composés organiques solubles dans l'eau, et leurs mélanges.

6. Procédé selon l'une quelconque des revendications précédentes, dans lequel le premier liquide est choisi parmi l'eau de mer ; les eaux saumâtres ; les lixiviats de décharges publiques ; les eaux de production pétrolière ; les eaux d'extraction du gaz de schiste par la technique de fracturation hydraulique ; les liquides de l'industrie agroalimentaire tels que les jus de fruits ou le café ; les liquides de l'industrie pharmaceutique ; les liquides de l'industrie chimique ; les effluents miniers, par exemple les rejets miniers chargés en sulfates, phosphates ou carbonates ; les effluents de l'industrie métallurgique; les effluents de l'industrie nucléaire ; les concentrâts d'osmose inverse ; les solutions entartrantes ; les effluents de l'industrie papetière ; les aquifères salins.

7. Procédé selon l'une quelconque des revendications précédentes, dans lequel le premier liquide a une concentration en impureté(s) de 1 mg/L à 500 g/L, de préférence de 100 mg/L à 250 g/L.

8. Procédé selon l'une quelconque des revendications précédentes, dans lequel le premier liquide est choisi parmi les solutions aqueuses de NaCl dont la concentration en NaCl est supérieure à 150 g/L.

9. Procédé selon l'une quelconque des revendications précédentes, dans lequel l'agent osmotique est choisi en prenant comme critère de choix l'efficacité osmotique.

10. Procédé selon l'une quelconque des revendications précédentes, dans lequel l'agent osmotique est choisi parmi les sels, notamment les sels minéraux, les composés ioniques, les protéines et les glucides.

11. Procédé selon la revendication 10, dans lequel l'agent osmotique est le chlorure de sodium NaCl.

12. Procédé selon l'une quelconque des revendications précédentes, dans lequel le second liquide aqueux est un liquide aqueux synthétique, tel qu'une solution aqueuse synthétique, de composition et de concentration contrôlées.

13. Procédé selon la revendication 12, dans lequel le second liquide aqueux est constitué uniquement par de l'eau et l'agent osmotique.

14. Procédé selon l'une quelconque des revendications précédentes, dans lequel la molécule-hôte est immiscible dans l'eau.

15. Procédé selon l'une quelconque des revendications précédentes, dans lequel la molécule-hôte est choisie parmi les molécules hôtes qui permettent de cristalliser des clathrates hydrates à la pression atmosphérique et à des températures supérieures à celle de la cristallisation de la glace.

16. Procédé selon l'une quelconque des revendications précédentes, dans lequel la molécule-hôte est choisie parmi les molécules qui forment un clathrate hydrate ayant une densité inférieure à la densité du second liquide, par exemple inférieure à 1,3, de préférence inférieure à 1,0.

17. Procédé selon l'une quelconque des revendications précédentes, dans lequel la molécule-hôte est le cyclopentane ou le cyclohexane.

18. Procédé selon l'une quelconque des revendications précédentes, dans lequel le second liquide contenant l'agent osmotique séparé dans l'étape c) est renvoyé du second côté de la membrane semi-perméable.

19. Procédé selon l'une quelconque des revendications précédentes, dans lequel la molécule hôte obtenue dans l'étape d) est renvoyée dans l'étape b).

20. Installation (200) pour la mise en oeuvre du procédé selon l'une quelconque des revendications précédentes, comprenant :
- une enceinte osmotique (201) séparée en une première chambre (203) et en une seconde chambre (204) par une membrane semi-perméable (202) ;
- des moyens (205,206,207) pour envoyer un premier liquide comprenant de l'eau et au moins une impureté dans la première chambre pour être en contact avec un premier côté de la membrane semi-perméable ;
- des moyens (208) pour envoyer un second liquide aqueux contenant un agent osmotique dans la seconde chambre pour être en contact avec un second côté de la membrane semi-perméable ;
- un réacteur (212) de cristallisation et de croissance de clathrates hydrates dans lequel on forme des clathrates hydrates d'une molécule hôte dans le second liquide contenant l'agent osmotique ;
- des moyens (209,211) pour soutirer le second liquide dans la seconde chambre de l'enceinte osmotique et l'envoyer dans le réacteur de cristallisation et de croissance des clathrates hydrates ;
- des moyens (215) pour séparer les clathrates hydrates du second liquide contenant l'agent osmotique ; et
- des moyens (218) pour dissocier les clathrates hydrates séparés dans les moyens pour séparer les clathrates hydrates du second liquide, pour obtenir de l'eau pure et la molécule hôte.

21. Installation selon la revendication 20, comprenant en outre des moyens (214,208) pour renvoyer le second liquide contenant l'agent osmotique séparé dans les moyens pour séparer les clathrates hydrates du second liquide, dans la seconde chambre de l'enceinte osmotique.

22. Installation selon la revendication 20 ou 21, comprenant en outre des moyens (220,219,221) pour renvoyer la molécule-hôte obtenue dans les moyens pour dissocier les clathrates hydrates, dans le réacteur de cristallisation et de croissance de clathrates hydrates.

## Patentansprüche

1. Verfahren zur Reinigung einer ersten Flüssigkeit, die Wasser und wenigstens eine Verunreinigung erhält, durch direkte Osmose, wobei man die folgenden aufeinanderfolgenden Schritte ausführt:
a) man bringt die erste Flüssigkeit mit einer ersten Seite einer semipermeablen Membran in Kontakt, wobei eine zweite wässrige Flüssigkeit, die eine osmotische Substanz enthält, in Kontakt mit der zweiten Seite der semipermeablen Membran ist, wodurch das Wasser durch direkte Osmose von der ersten Flüssigkeit durch die semipermeable Membran hindurch extrahiert wird und in die zweite Flüssigkeit übertritt, die die osmotische Substanz enthält;
b) man bildet Hydratklathrate eines Wirtsmoleküls in der zweiten Flüssigkeit, die die osmotische Substanz enthält, in die das Wasser übergetreten ist;
c) man trennt die Hydratklathrate von der zweiten Flüssigkeit, die die osmotische Substanz enthält; und
d) man dissoziiert die getrennten Hydratklathrate, um reines Wasser und das Wirtsmolekül zu erhalten.

2. Verfahren nach Anspruch 1, das kontinuierlich ausgeführt wird.

3. Verfahren nach einem der vorhergehenden Ansprüche, wobei die erste Flüssigkeit und die zweite Flüssigkeit wässrige Lösungen sind.

4. Verfahren nach einem der vorhergehenden Ansprüche, wobei die Verunreinigung jegliches Element, Molekül, Ion oder Anderes ist, das von den Bestandteilen des reinen Wassers verschieden ist, nämlich H₂O, OH⁻ und H⁺.

5. Verfahren nach einem der vorhergehenden Ansprüche, wobei die Verunreinigung ausgewählt ist aus den Mineralsalzen wie zum Beispiel NaCl, den organischen Salzen, den wasserlöslichen organischen Verbindungen und deren Mischungen.

6. Verfahren nach einem der vorhergehenden Ansprüche, wobei die erste Flüssigkeit ausgewählt ist aus Meerwasser, Brackwasser, Sickerwasser von Deponien, Wasser aus der Mineralölproduktion, Wasser aus der Schiefergasextraktion mittels hydraulischer Frackingtechnik, Flüssigkeiten aus der Lebensmittelindustrie wie zum Beispiel Fruchtsäften oder Kaffee, Flüssigkeiten aus der pharmazeutischen Industrie, Flüssigkeiten aus der chemischen Industrie, Bergbauabwässern, beispielsweise Bergbauabflüssen, die mit Sulfaten, Phosphaten oder Karbonaten belastet sind, Abwässern aus der metallurgischen Industrie, Abwässern aus der Nuklearindustrie, Konzentraten der inversen Osmose, kalkhaltigen Lösungen, Abwässern aus der Papierindustrie, salzhaltige Aquifere.

7. Verfahren nach einem der vorhergehenden Ansprüche, wobei die erste Flüssigkeit eine Konzentration von Verunreinigung(en) von 1mg/L bis 500 g/L hat, vorzugsweise von 100 mg/L bis 250 g/L.

8. Verfahren nach einem der vorhergehenden Ansprüche, wobei die erste Flüssigkeit ausgewählt ist aus den wässrigen Lösungen von NaCl, deren NaCl-Konzentration größer als 150 g/L ist.

9. Verfahren nach einem der vorhergehenden Ansprüche, wobei die osmotische Substanz ausgewählt wird, indem man als Auswahlkriterium die osmotische Wirksamkeit verwendet.

10. Verfahren nach einem der vorhergehenden Ansprüche, wobei die osmotische Substanz ausgewählt ist aus den Salzen, insbesondere den Mineralsalzen, den ionischen Verbindungen, den Proteinen und den Glukiden.

11. Verfahren nach Anspruch 10, wobei die osmotische Substanz Natriumchlorid NaCl ist.

12. Verfahren nach einem der vorhergehenden Ansprüche, wobei die zweite wässrige Flüssigkeit eine synthetische wässrige Flüssigkeit ist, wie zum Beispiel eine synthetische wässrige Lösung mit kontrollierter Zusammensetzung und Konzentration.

13. Verfahren nach Anspruch 12, wobei die zweite wässrige Flüssigkeit ausschließlich aus Wasser und der osmotischen Substanz besteht.

14. Verfahren nach einem der vorhergehenden Ansprüche, wobei das Wirtsmolekül in Wasser nicht mischbar ist.

15. Verfahren nach einem der vorhergehenden Ansprüche, wobei das Wirtsmolekül ausgewählt ist aus den Wirtsmolekülen, die eine Kristallisation der Hydratklathrate bei Atmosphärendruck und bei Temperaturen oberhalb jener der Kristallisation von Eis ermöglichen.

16. Verfahren nach einem der vorhergehenden Ansprüche, wobei das Wirtsmolekül ausgewählt ist aus den Molekülen, die ein Hydratklathrat mit einer Dichte kleiner als die Dichte der zweiten Flüssigkeit bilden, beispielsweise kleiner als 1,3, vorzugsweise kleiner als 1,0.

17. Verfahren nach einem der vorhergehenden Ansprüche, wobei das Wirtsmolekül Cyclopentan oder Cyclohexan ist.

18. Verfahren nach einem der vorhergehenden Ansprüche, wobei die zweite Flüssigkeit, die die osmotische Substanz enthält, die im Schritt c) getrennt wird, zu der zweiten Seite der semipermeablen Membran zurückgeschickt wird.

19. Verfahren nach einem der vorhergehenden Ansprüche, wobei das im Schritt d) erhaltene Wirtsmolekül zum Schritt b) zurückgeschickt wird.

20. Anlage (200) für die Durchführung des Verfahrens nach einem der vorhergehenden Ansprüche, umfassend:
- einen Osmosebehälter (201), der durch eine semipermeable Membran (202) in eine erste Kammer (203) und in eine zweite Kammer (204) getrennt ist;
- Mittel (205, 206, 207) zum Schicken einer ersten Flüssigkeit, die Wasser und wenigstens eine Verunreinigung enthält, in die erste Kammer, um in Kontakt mit einer ersten Seite der semipermeablen Membran zu gelangen;
- Mittel (208) zum Schicken einer zweiten wässrigen Flüssigkeit, die eine osmotische Substanz enthält, in die zweite Kammer, um in Kontakt mit einer zweiten Seite der semipermeablen Membran zu gelangen;
- einen Reaktor (212) für Kristallisation und Wachstum von Hydratklathraten, in dem man Hydratklathrate eines Wirtsmoleküls in der zweiten Flüssigkeit bildet, die die osmotische Substanz enthält;
- Mittel (209, 2011) zum Abziehen der zweiten Flüssigkeit aus der zweiten Kammer des osmotischen Behälters und zum Schicken derselben in den Reaktor für Kristallisation und Wachstum von Hydratklathraten;
- Mittel (215) zum Trennen der Hydratklathrate von der zweiten Flüssigkeit, die die osmotische Substanz enthält; und
- Mittel (218) zum Dissoziieren der Hydratklathrate, die in den Mitteln zum Trennen der Hydratklathrate von der zweiten Flüssigkeit separiert sind, um reines Wasser und das Wirtsmolekül zu erhalten.

21. Anlage nach Anspruch 20, ferner umfassend Mittel (214, 208) zum Zurückschicken der zweiten Flüssigkeit, die die osmotische Substanz enthält, die in den Mitteln zum Separieren der Hydratklathrate von der zweiten Flüssigkeit getrennt wurde, in die zweite Kammer des osmotischen Behälters.

22. Anlage nach Anspruch 20 oder 21, ferner umfassend Mittel (220, 219, 221) zum Zurückschicken des Wirtsmoleküls, das in den Mitteln zum Dissoziieren der Hydratklathrate erhalten wurde, in den Reaktor für Kristallisation und für Wachstum von Hydratklathraten.

## Claims

1. A method for purifying a first liquid comprising water and at least one impurity, by direct osmosis, in which the following successive steps are performed:
a) contacting the first liquid with a first side of a semi-permeable membrane, a second aqueous liquid containing an osmotic agent being in contact with the second side of the semi-permeable membrane, whereby water is extracted by direct osmosis from the first liquid through the semi-permeable membrane and passes into the second liquid containing the osmotic agent;
b) forming clathrates hydrates of a host molecule in the second liquid containing the osmotic agent into which the water has passed;
c) separating the clathrates hydrates from the second liquid containing the osmotic agent; and
d) dissociating the separated clathrates hydrates to obtain pure water and the host molecule.

2. The method according to claim 1, which is continuously performed.

3. The method according to any one of the preceding claims, wherein the first liquid and the second liquid are aqueous solutions.

4. The method according to any one of the preceding claims, wherein the impurity is any element, molecule, ion, or other, different from the elements constituting pure water, that is H₂O, OH⁻, and H⁺.

5. The method according to any one of the preceding claims, wherein the impurity is selected from mineral salts such as NaCl, organic salts, water soluble organic compounds, and mixtures thereof.

6. The method according to any one of the preceding claims, wherein the first liquid is chosen from sea water; brackish waters; landfills leachates; oil production waters; waters from shale gas extraction by the hydraulic fracturing technique; agro-food industry liquids such as fruit juices or coffee; pharmaceutical industry liquids; chemical industry liquids; mining effluents, for example sulphate, phosphate or carbonate loaded mining wastes; metallurgical industry effluents; nuclear industry effluents; reverse osmosis concentrates; scale-forming solutions; paper industry effluents; saline aquifers.

7. The method according to any one of the preceding claims, wherein the first liquid has a concentration of impurity(ies) from 1mg/L to 500 g/L, preferably from 100 mg/L to 250 g/L.

8. The method according to any one of the preceding claims, wherein the first liquid is selected from NaCl aqueous solutions the NaCl concentration of which is higher than 150 g/L.

9. The method according to any one of the preceding claims, wherein the osmotic agent is chosen by taking as a choice criterion the osmotic efficiency.

10. The method according to any one of the preceding claims, wherein the osmotic agent is chosen from salts, in particular mineral salts, ionic compounds, proteins and carbohydrates.

11. The method according to claim 10, wherein the osmotic agent is sodium chloride NaCl.

12. The method according to any one of the preceding claims, wherein the second aqueous liquid is a synthetic aqueous liquid, such as a synthetic aqueous solution, with regulated, controlled, composition and concentration.

13. The method according to claim 12, wherein the second aqueous liquid only consists of water and of the osmotic agent.

14. The method according to any one of the preceding claims, wherein the host molecule is water immiscible.

15. The method according to any one of the preceding claims, wherein the host molecule is chosen from host molecules which enable clathrates hydrates to be crystallised at atmospheric pressure and at temperatures higher than that of ice crystallisation.

16. The method according to any one of the preceding claims, wherein the host molecule is chosen from molecules which form a clathrate hydrate having a specific gravity lower than the specific gravity of the second liquid, for example lower than 1.3, preferably lower than 1.0.

17. The method according to any one of the preceding claims, wherein the host molecule is cyclopentane or cyclohexane.

18. The method according to any one of the preceding claims, wherein the second liquid containing the osmotic agent separated in step c), is sent back to the second side of the semi-permeable membrane.

19. The method according to any one of the preceding claims, wherein the host molecule obtained in step d) is sent back to step b).

20. A facility (200) for implementing the method according to any one of the preceding claims, comprising:
- an osmotic enclosure (201) separated into a first chamber (203) and a second chamber (204) by a semi-permeable membrane (202);
- means (205, 206, 207) for sending a first liquid comprising water and at least one impurity into the first chamber to contact a first side of the semi-permeable membrane;
- means (208) for sending a second aqueous liquid containing an osmotic agent into the second chamber to contact a second side of the semi-permeable membrane;
- a reactor (212) for crystallising and growing clathrates hydrates in which clathrates hydrates of a host molecule are formed in the second liquid containing the osmotic agent;
- means (209, 211) for removing the second liquid from the second chamber of the osmotic enclosure and sending it into the reactor for crystallising and growing the clathrates hydrates;
- means (215) for separating the clathrates hydrates from the second liquid containing the osmotic agent; and
- means (218) for dissociating the clathrates hydrates separated in the means for separating the clathrates hydrates from the second liquid, to obtain pure water and the host molecule.

21. The facility according to claim 20, further comprising means (214, 208) for sending back the second liquid containing the osmotic agent separated in the means for separating the clathrates hydrates from the second liquid, into the second chamber of the osmotic enclosure.

22. The facility according to claim 20 or 21, further comprising means (220, 219, 221) for sending back the host molecule obtained in the means for dissociating the clathrates hydrates, into the reactor for crystallising and growing clathrates hydrates.
